# EUROPEAN PATENT APPLICATION

(11) **EP 1 568 558 A1**
(43) Date of publication of application: **31.08.2005**
(21) Application number: 04100740.2
(22) Date of filing: 25.02.2004
(51) Int. Cl.: B60S 1/38

(54) **Windscreen wiper device**

(71) Applicant: Federal-Mogul S.A., 6790 Aubange (BE)
(72) Inventor: Boland, Xavier, 6700, Arlon (BE); Henin, Pierre, 6730, Bellefontaine (BE)
(74) Representative: Hooiveld, Arjen Jan Winfried

(57) **Abstract**

A windscreen wiper device (1) comprising an elastic, elongated carrier element, as well as an elongated wiper blade (2) of a flexible material, which can be placed in abutment with a windscreen to be wiped, which wiper blade includes opposing longitudinal grooves (3) on its longitudinal sides, in which grooves spaced-apart longitudinal strips (4) of the carrier element are disposed, wherein neighbouring ends (5) of said longitudinal strips (4) are interconnected by a respective connecting piece (6), which windscreen wiper device (1) comprises a connecting device (7) for an oscillating wiper arm (8), wherein said oscillating arm (8) is pivotally connected to said connecting device (7) about a pivot axis near one end, with the special feature that said connecting device (7) comprises engaging members (9), which engage around longitudinal sides of said longitudinal strips (4) that face away from each other, so that said strips (4) are mounted in grooves formed by said engaging members (9), wherein each engaging member (9) comprises at least one protrusion (13) made integral therewith clamped in a hole (14) in a corresponding longitudinal strip (4).

## Description

The invention relates to a windscreen wiper device comprising an elastic, elongated carrier element, as well as an elongated wiper blade of a flexible material, which can be placed in abutment with a windscreen to be wiped, which wiper blade includes opposing longitudinal grooves on its longitudinal sides, in which grooves spaced-apart longitudinal strips of the carrier element are disposed, wherein neighbouring ends of said longitudinal strips are interconnected by a respective connecting piece, which windscreen wiper device comprises a connecting device for an oscillating wiper arm, wherein said oscillating arm is pivotally connected to said connecting device about a pivot axis near one end.

Such a windscreen wiper device is generally known. The prior art windscreen wiper device is in particular designed as a "yokeless" wiper device, wherein use is no longer made of several yokes pivotally connected to each other, but wherein the wiper blade is biased by the carrier element, as a result of which it exhibits a specific curvature. The oscillating arm of the prior art windscreen wiper device comprises a projecting pin on one side thereof, which is inserted sideways into a through hole of the connecting device.

The known connecting device is attached to the unit consisting of the elongate wiper blade and the longitudinal strips through a clamping operation, wherein clamping parts of said connecting device are clamped round longitudinal sides of the strips. In order to lock said connecting device in a direction along the longitudinal strips, said strips are each provided with a recess at their exterior longitudinal side so that the clamping parts of the connecting device rest in said recess. Obviously, cutting such a precisely shaped recess in each longitudinal strip needs additional tools and an extra step in manufacturing said windshield wiper device. Furthermore, such cutting creates a weak point in said strips.

The object of the invention is to overcome the drawbacks of the prior art as indicated above, in particular to provide a windscreen wiper device wherein the connecting device and the unit consisting of the wiper blade and the strips are interconnected in a durable, solid manner, without the need of additional tools and an extra cutting step in the manufacturing process of the windshield wiper device. Without cutting said strips, the mechanical resistance of said strips is not decreased in the middle portion thereof where stresses are bigger.

In order to accomplish that objective, a windscreen wiper device of the kind referred to in the introduction is characterized in that said connecting device comprises engaging members, which engage around longitudinal sides of said longitudinal strips that face away from each other, so that said strips are mounted in grooves formed by said engaging members, wherein each engaging member comprises at least one protrusion made integral therewith clamped in a hole in a corresponding longitudinal strip. In other words, the longitudinal strips are mounted in said grooves, so that the wiper blade is locked against any movement relative to the connecting device in transversal direction, that is in a direction perpendicular to the windscreen to be wiped. In order to achieve a similar locking in longitudinal direction said protrusion at least partly extends into said hole, while being clamped in said hole. Particularly, said hole is made in a corresponding longitudinal strip through a stamping, cutting or sawing operation included in the die or mould for stamping, cutting or sawing the longitudinal strip as such. Said hole does not decrease the mechanical resistance of the longitudinal strip in a significant manner.

In a preferred embodiment of a windscreen wiper device according to the invention said protrusion extends inwardly in transversal direction. Instead of partly extending in a clamping manner in an inward transversal direction, it is also possible that said protrusion forms a bridge between its engaging member and said connecting device.

In another preferred embodiment of a windscreen wiper device according to the invention said protrusion has an at least substantially constant cross-sectional width along its length.

In another preferred embodiment of a windscreen wiper device according to the invention the connecting device and the engaging members are made in one piece, particularly one piece of a plastic material. Preferably, the connecting device and the engaging members are made in one piece of a thermoplastic material.

The invention furthermore relates to a method for manufacturing a windscreen wiper device according to the invention, wherein opposing longitudinal grooves are formed in the longitudinal sides of an elongated wiper blade made of a flexible material, which can be placed in abutment with a windscreen to be wiped, in which grooves longitudinal strips of a carrier element are subsequently fitted in spaced-apart relationship, wherein neighbouring ends of said longitudinal strips are interconnected by a respective connecting piece, and wherein an oscillating arm is pivotally connected to a connecting device of the windscreen wiper device about a pivot axis near one end thereof, characterized in that said connecting device is provided with engaging members, which engage around longitudinal sides of said longitudinal strips that face away from each other, so that said strips are mounted in grooves formed by said engaging members, wherein each engaging member is provided with at least one protrusion made integral therewith clamped in a hole in a corresponding longitudinal strip.

In a preferred embodiment of a method according to the invention said protrusions are made on the connecting device through a heating operation. Such a heating operation is preferably carried out through a laser or an ultrasonic device.

In another preferred embodiment of a method according to the invention the hole is made in the longitudinal strip through a stamping operation. In that way the shape of the hole can be accurately controlled. In the alternative, the hole is made by cutting or sawing.

The invention will now be explained in more detail with reference to figures illustrated in a drawing, wherein:
- Figure 1 is a perspective, schematic view of a preferred embodiment of a windscreen wiper device according to the invention;
- Figures 2 and 3 show details of the windscreen wiper device of Figure 1;
- Figure 4 and 5 refer to cross-sectional views of the connecting device of the windscreen wiper device of Figure 1.

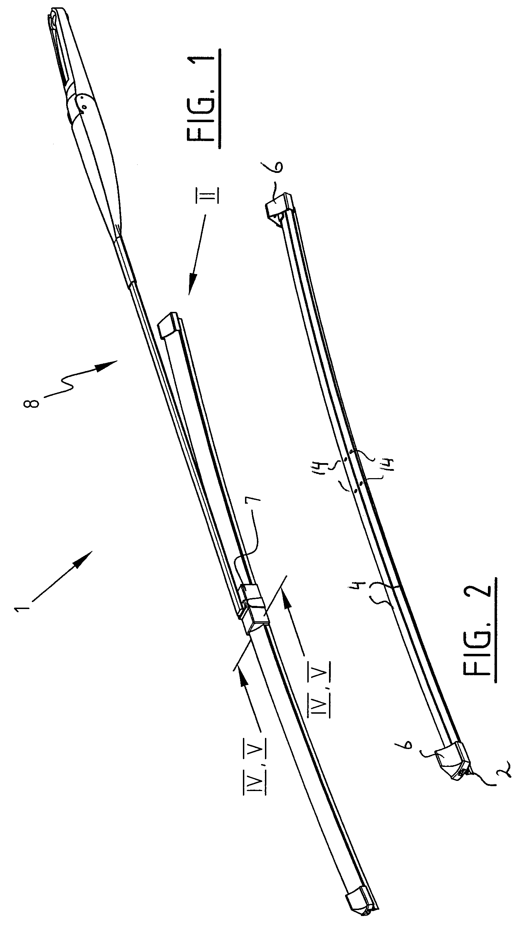

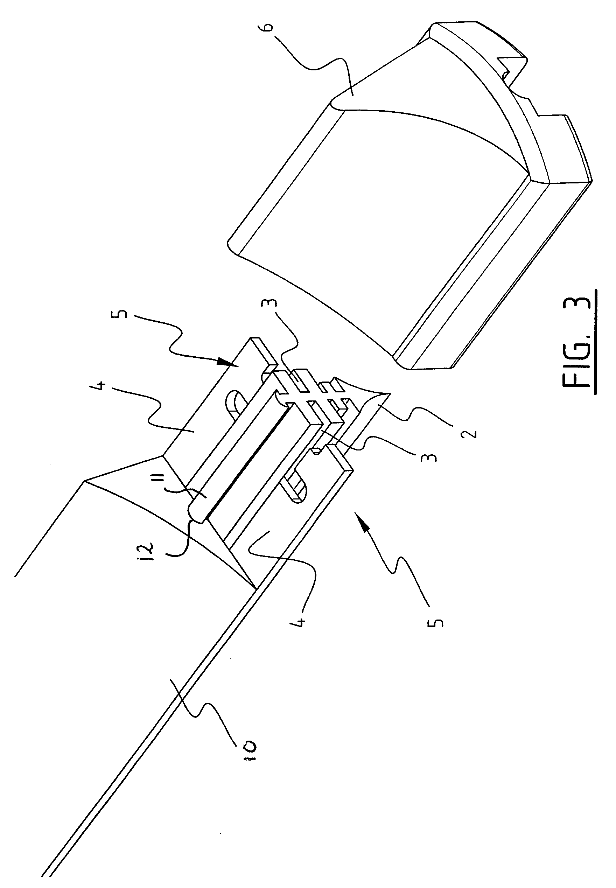

Figures 1, 2 and 3 show a preferred variant of a windscreen wiper device 1 according to the invention. Said windscreen wiper device is built up of an elastomeric wiper blade 2, in the longitudinal sides of which opposing longitudinal grooves 3 are formed, and of longitudinal strips 4 made of spring band steel, which are fitted in said longitudinal grooves 3. Said strips 4 form a flexible carrier element for the rubber wiper blade 2, as it were, which is thus biased in a curved position (the curvature in operative position being that of a windscreen to be wiped). Neighbouring ends 5 of strips 4 are interconnected on either side of the windscreen wiper device 1 by means of connecting pieces 6 functioning as clamping members. In this embodiment, the connecting pieces 6 are separate constructional elements, which may be form-locked ("positive locking" or "having positive fit") as well as force-locked to the ends 5 of strips 4. In another preferred variant, said connecting pieces 6 are in one piece with the strips 4 made of spring band steel. In the latter case said connecting pieces form transverse bridges for the strips 4, as it were.

The windscreen wiper device 1 is furthermore built up of a connecting device 7 of plastic material for an oscillating wiper arm 8. Connecting device 7 comprises engaging members 9 that are integral therewith, which are welded to longitudinal sides 10 of the strips 4 that face away from each other, as a result of which the connecting device 7 is firmly attached to the unit consisting of wiper blade 2 and strips 4. In this respect it is noted that the connecting device 7 is made of a thermoplastic material and the strips 4 are made of steel with a thermoplastic skin (coating). The engaging members 9 engage around said strips 4 or -in other words- said strips 4 are mounted in grooves formed by the engaging members 9. The oscillating wiper arm 8 is pivotally connected to the connecting device 7 about a pivot axis near one end. The wiper blade 2 may comprise a spoiler or air deflector 10 detachably connected therewith. Mounting the spoiler 10 onto the wiper blade 2 is realized by sliding the spoiler 10 on the wiper blade 2, so that an extension with an enlarged head 11 of the wiper blade 2 fits into a correspondingly shaped groove 12 in the spoiler 10. Said spoiler 10 is made of rubber, for example.

Figure 2 shows a unit of the wiper blade 2, the longitudinal strips 4 and the connecting pieces 6.

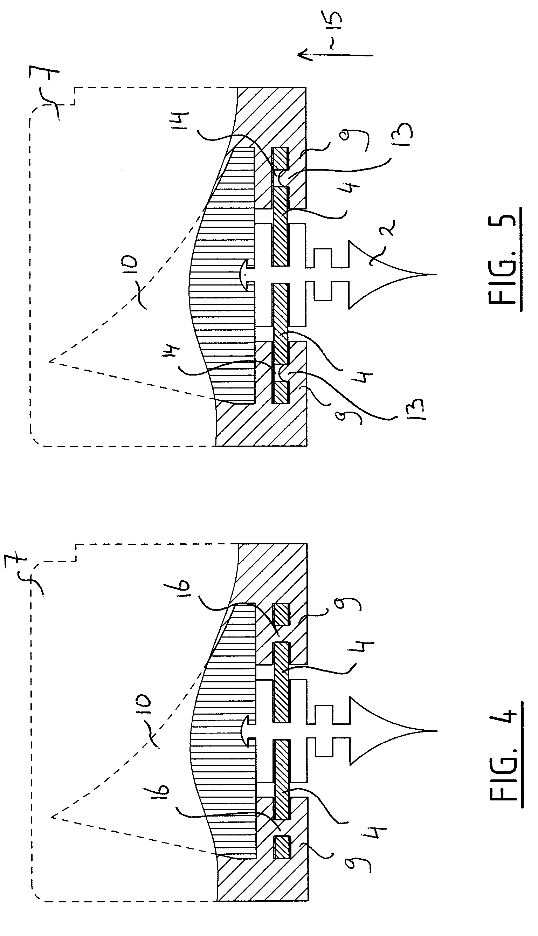

With reference to figures 4 and 5, each engaging member 9 includes a protrusion 13 made integral therewith, wherein said protrusion 13 is clamped into a hole 14 in a corresponding longitudinal strip 4. Said protrusion 13 extends inwardly in transversal direction (arrow 15). Said protrusion 13 may have a length smaller than the length of the hole 14 (figure 5) or may form a bridge 16 between its engaging member 9 and said connecting device 7. Particularly, the connecting device 7 and the engaging members 9 with protrusions 13/bridges 16 are made in one piece of plastic material.

## Claims

1. A windscreen wiper device (1) comprising an elastic, elongated carrier element, as well as an elongated wiper blade (2) of a flexible material, which can be placed in abutment with a windscreen to be wiped, which wiper blade (2) includes opposing longitudinal grooves (3) on its longitudinal sides, in which grooves spaced-apart longitudinal strips (4) of the carrier element are disposed, wherein neighbouring ends (5) of said longitudinal strips (4) are interconnected by a respective connecting piece (6), which windscreen wiper device (1) comprises a connecting device (7) for an oscillating wiper arm (8), wherein said oscillating arm (8) is pivotally connected to said connecting device (7) about a pivot axis near one end, **characterized in that** said connecting device (7) comprises engaging members (9), which engage around longitudinal sides of said longitudinal strips (4) that face away from each other, so that said strips (4) are mounted in grooves formed by said engaging members (9), wherein each engaging member (9) comprises at least one protrusion (13) made integral therewith clamped in a hole (14) in a corresponding longitudinal strip (4).

2. A windscreen wiper device (1) according to claim 1, wherein said protrusion (13) extends inwardly in transversal direction.

3. A windscreen wiper device (1) according to claim 1 or 2, wherein said protrusion (13) forms a bridge (16) between its engaging member (9) and said connecting device (7).

4. A windscreen wiper device (1) according to claim 1, 2 or 3, wherein said protrusion (13) has an at least substantially constant cross-sectional width along its length.

5. A windscreen wiper device (1) according to any one of the preceding claims 1 through 4, wherein said connecting device (7) and said engaging members (9) are made in one piece.

6. A windscreen wiper device (1) according to claim 5, wherein said connecting device (7) and said engaging members (9) are made in one piece of a plastic material.

7. A method for manufacturing a windscreen wiper device (1) according to any one of the preceding claims 1 - 6, wherein opposing longitudinal grooves (3) are formed in the longitudinal sides of an elongated wiper blade (2) of a flexible material, which can be placed in abutment with a windscreen to be wiped, in which grooves longitudinal strips (4) of a carrier element are subsequently fitted in spaced-apart relationship, wherein neighbouring ends (5) of said longitudinal strips (4) are interconnected by a respective connecting piece (6), wherein an oscillating arm (8) is pivotally connected to a connecting device (7) of the windscreen wiper device about a pivot axis near one end thereof, **characterized in that** said connecting device (7) is provided with engaging members (9), which engage around longitudinal sides of said longitudinal strips (4) that face away from each other, so that said strips (4) are mounted in grooves formed by said engaging members (9), wherein each engaging member (9) is provided with at least one protrusion (13) made integral therewith clamped in a hole (14) in a corresponding longitudinal strip (4).

8. A method according to claim 7, wherein said protrusions (13) are made on said engaging members (9) through a heating operation.

9. A method according to claim 8, wherein the heating operation is carried out with the help of a laser or an ultrasonic device.

10. A method according to any of the preceding claims 6 through 9, wherein said hole is made in the longitudinal strip (4) through a stamping operation.
